(19) Europäisches Patentamt
European Patent Office
Office européen des brevets

(11) **EP 0 776 118 B1**

(12) **EUROPÄISCHE PATENTSCHRIFT**

(45) Veröffentlichungstag und Bekanntmachung des Hinweises auf die Patenterteilung:
**22.09.1999  Patentblatt 1999/38**

(51) Int Cl.⁶: **H04M 9/08**, H04B 3/23

(21) Anmeldenummer: **96402514.2**

(22) Anmeldetag: **22.11.1996**

(54) **Verfahren zur Echokompensation**

Echo cancelling method

Procédé d'annulation d'écho

(84) Benannte Vertragsstaaten:
**AT BE CH DE ES FI FR GB IT LI NL SE**

(30) Priorität: **23.11.1995  DE 19543666**

(43) Veröffentlichungstag der Anmeldung:
**28.05.1997  Patentblatt 1997/22**

(73) Patentinhaber: **ALCATEL
75008 Paris (FR)**

(72) Erfinder: **Maurer, Michael
71336 Waiblingen (DE)**

(74) Vertreter: **Müller, Joachim, Dipl.-Ing. et al
Alcatel
Intellectual Property Department, Stuttgart
Postfach 30 09 29
70449 Stuttgart (DE)**

(56) Entgegenhaltungen:
DE-A- 4 305 256          GB-A- 2 225 517
US-A- 5 062 102          US-A- 5 453 976

• PATENT ABSTRACTS OF JAPAN vol. 15, no. 417 (E-1125), 23. Oktober 1991 & JP 03 173229 A (NEC CORP), 26. Juli 1991,

**Beschreibung**

Die Erfindung betrifft einen Echokompensator, der in Übertragungssystemen mit 2Draht/4Draht-Übergängen, beispielsweise in Kommunikationssystemen nach dem DECT-Standard (Digital Enhanced Cordless Telecommunications-Standard) eingesetzt wird. 2Draht/4Draht-Übergänge werden mit Gabelschaltungen realisiert, bei denen Fehlanpassungen technisch nie vollständig vermieden werden können, so daß dadurch Signalreflexionen auftreten, die sich mindernd auf die Übertragungsqualität auswirken. Ebenso ist der Einsatz eines Echokompensators in Freisprecheinrichtungen von Kommunikationsendgeräten möglich, bei denen die akustische Kopplung zwischen dem Lautsprecher über den umgebenden Raum und dem Mikrofon zur unerwünschten Übertragung des empfangenen Signals zum Sprecher am fernen Ende der Übertragungsstrecke führt und dort als störendes Echo wahrgenommen wird.

Es ist grundsätzlich bekannt, die Wirkung der Echos durch Echokompensatoren zu beseitigen, vgl. R. Wehrmann u.a.: Signalverarbeitungsverfahren zur Verbesserung der Sprachkommunikation über Freisprecheinrichtungen. Der Fernmelde-Ingenieur, 48. Jahrgang, Oktober 1994, Seite 27-28. Mit einem Echokompensator wird die Übertragungsfunktion des realen Systems aus einer Leitung in Senderichtung und einer Leitung in Empfangsrichtung, die durch fehlangepaßte Gabelschaltungen elektrisch miteinander verkoppelt sind, möglichst genau nachgebildet. Bei Freisprecheinrichtungen wird die Übertragungsfunktion des realen Systems Lautsprecher-Raum-Mikrofon möglichst genau nachgebildet. Das beim Teilnehmer eintreffende Signal durchläuft dann sowohl das reale als auch das durch den Echokompensator nachgebildete System, und anschließend wird das Ausgangssignal des Echokompensators vom echobehafteten Signal des realen Systems subtrahiert, so daß somit das Echo weitgehend kompensiert wird.

Zur Realisierung von Echokompensatoren werden digitale Filter eingesetzt, deren Filterkoeffizienten beispielsweise nach dem Normalized Least Mean Square Algorithmus, kurz NLMS-Algorithmus, bestimmt werden können, vgl. T. Huhn, H.-J. Jentschel: Kombination von Geräuschreduktion und Echokombination beim Freisprechen. Nachrichtentechnik Elektronik, Berlin 43 (1993), Seite 274-280. Die notwendige Filterlänge wird durch die Abtastfrequenz und durch die Echolaufzeit bestimmt. Die Filterkoeffizienten müssen entsprechend dem sich ändernden Echosignal ständig aktualisiert werden. So müssen beispielsweise in einem Übertragungssystem, in dem alle $125\mu s$ ein neuer Abtastwert des zu übertragenen Signals zur Verfügung gestellt wird und in dem die Echolaufzeit 70ms beträgt, 560 Abtastwerte abgespeichert und abgearbeitet werden, nämlich

$$70ms \bullet \frac{8\ \text{Abtastwerte}}{1ms} = 560\ \text{Abtastwerte}.$$

Um eine brauchbare Annäherung an die Zeitfunktion des Echos zu erhalten, ist zur Realisierung des Echokompensators ein digitaler Signalprozessor mit hoher Arbeitsgeschwindigkeit und ein großer Speicherplatzbedarf erforderlich, so daß diese Möglichkeit nur mit hohem Kostenaufwand technisch verwirklicht werden kann. Die an sich bekannten Lösungen sind wegen ihres großen Aufwandes ungeeignet, um insbesondere die kommerziellen Anforderungen an qualitativ zufriedenstellende Freisprecheinrichtungen erfüllen zu können.

Eine Schwierigkeit bei der Bestimmung der Filterkoeffizienten besteht darin, die aktuelle Impulsantwort des nachgebildeten Systems nur dann zu bestimmen, wenn keine störenden Einflüsse vorhanden sind. So besteht die Forderung, bei Einsatz eines digitalen Filters sehr zuverlässig zu unterscheiden zwischen lokalen Echos und Geräuschen oder aktivem lokalen Sprecher und zwischen Leitungsechos und aktivem fernen Sprecher, um Filterkoeffizienten nur bei schweigendem lokalen Sprecher und schweigendem fernen Sprecher zu bestimmen, weil dann im wesentlichen nur Echosignale empfangen werden. So ist es bekannt, eine Korrelationsmessung zwischen empfangenem Echosignal und gesendetem Signal vorzunehmen, um den günstigsten Zeitpunkt für die Bestimmung der Filterkoeffizienten zu ermitteln, vgl. DE 43 05 256 A1. In dieser Veröffentlichung wird beschrieben, wie mit der Korrelationsanalyse bestimmt wird, wann ein akustischer Kopplungsfaktor als Maß für ein Echosignal bestimmt wird. Die praktische Anwendung scheitert jedoch daran, daß der Rechenaufwand für die Korrelationsanalyse sehr groß ist.

Weiterhin ist ein Echokompensator bekannt, bei dem durch Variation der Filterkoeffizienten eines digitalen Filters die Übertragungsfunktion bestimmt wird. Dazu wird eine Autokorrelation des gesendeten Signals, eine Kreuzkorrelation von gesendetem und echobehaftetem empfangenen Signal und eine Bewertung der Korrelationsergebnisse durchgeführt, vgl. US-A-5 062 102. Für die Durchführung der Korrelationen ist ein beträchtlicher Rechenaufwand erforderlich.

Schließlich ist eine Lösung bekannt, bei der die adaptive Echokompensatorfunktion von der Art der empfangenen Signale gesteuert wird. Bei Empfang von sinusförmigen Signaltönen wird die Wirkung des Echokompensators unterdrückt, vgl. US-A-5 453 976.

Mit der Erfindung soll nun die Aufgabe gelöst werden, einen Echokompensator mit einem digitalen Filter so auszubilden, daß die Anzahl der zu bestimmenden Filterkoeffizienten und der Aufwand für der Echokompensator als deren Berechnung so klein wird, daß kostengünstiges Bauteil in einem Kommunikationssystem nach dem DECT-Standard eingesetzt werden kann.

Diese Aufgabe wird erfindungsgemäß durch die im ersten Patentanspruch angegebene Lehre gelöst.

Das Wesen der Erfindung besteht darin, daß durch eine Blockautokorrelation, damit wird die Korrelation eines Blocks aus einer definierten Anzahl von Abtastwerten des gesendeten Signals mit den von diesem gesendeten Signal herrührendem empfangenen Echos bezeichnet, jeweils die Zeitpunkte ermittelt werden, in denen ein Echo eintrifft und in denen dann eine Aktualisierung der Koeffizienten des digitalen Filters erfolgt.

Die Wirkungsweise der Erfindung wird nachstehend an einem Ausführungsbeispiel erläutert. In der dazugehörigen Zeichnung zeigen

Fig. 1  eine schematische Darstellung der Autokorrelation,
Fig. 2  eine schematische Darstellung der Blockautokorrelation,
Fig. 3  ein Funktionsschaltbild eines Blockautokorrelators und
Fig. 4  ein Funktionsschaltbild eines Echokompensators mit einem Blockautokorrelator.

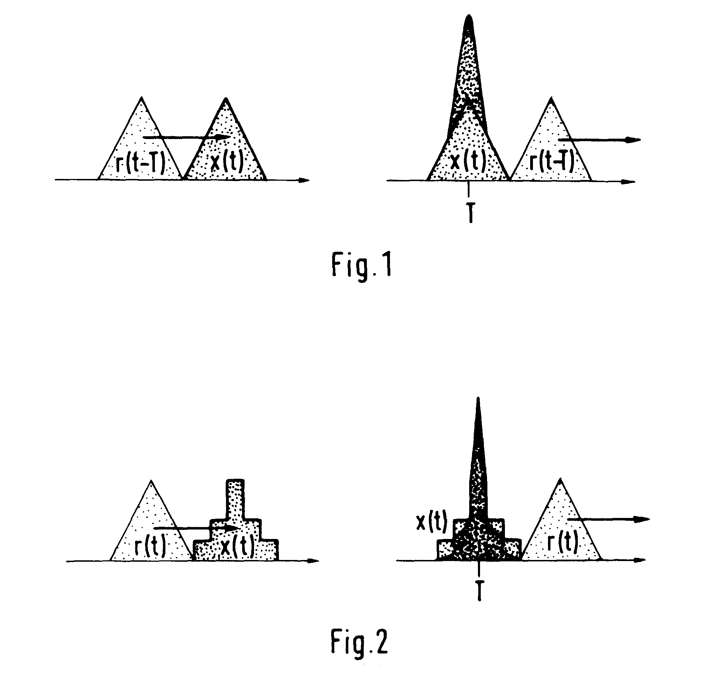

Grundsätzlich ist es möglich, die zeitliche Lage eines Echos durch Autokorrelation zu bestimmen. Dazu wird gemäß Fig. 1 der zeitliche Mittelwert des Produkts aus der Funktion $x(t)$ mit der um die Zeit T verschobenen gleichen Funktion $r(t-T)$ gebildet und somit die Autokorrelation zwischen gesendeten Signal und empfangenem Echo ermittelt.

Um den großen Rechenaufwand bei der Autokorrelation einzelner Abtastwerte zu vermeiden, wird gemäß Fig. 2 erfindungsgemäß eine Autokorrelation ausgewählter Blöcke durchgeführt. In Fig. 2 besteht die Funktion $x(t)$ aus beispielsweise fünf repräsentativen Werten, die jeweils aus einem Block ermittelt werden. Durch Blockautokorrelation mit dem Echosignal $r(t)$ wird ein Blockmittelwert ermittelt, dessen größter Wert angibt, in welchem Block das Echo am größten ist. Somit lassen sich auch generell die Zeitabschnitte ermitteln, in denen überhaupt Echos auftreten.

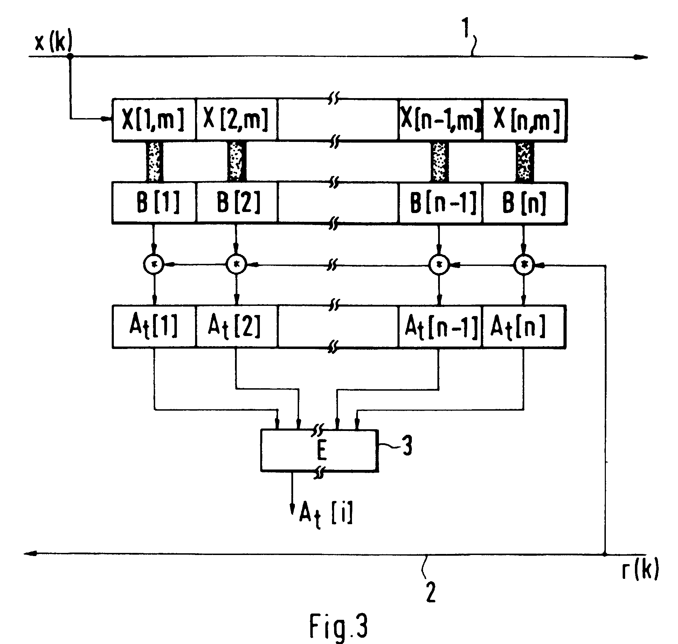

Gemäß Fig. 3 wird der Blockautokorrelator zwischen die Leitung in Senderichtung 1 und die Leitung in Empfangsrichtung 2 geschaltet. Eine bestimmte Anzahl m der Abtastwerte $x(k)$ des Signals in Senderichtung, beispielsweise m = 8, wird zu einem Block $B[n]$ zusammengefaßt, der aus den Elementen $X[n,m]$ besteht, wobei n = Anzahl der Blöcke ist. Für jeden Block $B[n]$ wird aus der Anzahl m der Abtastwerte $x(k)$ ein repräsentativer Blockwert $B_t[i]$ berechnet. Die Berechnung erfolgt nach folgender Vorschrift:

$$B_t[i] = (1-\alpha) \bullet B_{t-1}[i] + \alpha \bullet X[i,1] \tag{1}$$

mit $0 < \alpha < 1$
und $1 \leq i \leq n$,

wobei $B_t[i]$ der aktuelle repräsentative Blockwert und $B_{t-1}[i]$ der zeitlich zuvor ermittelte repräsentative Blockwert ist.

Für diese Berechnung (1) wird nur das erste Element $X[i,1]$ eines Blockes $B[i]$ benötigt. Der Faktor $\alpha$ gibt den Einfluß des zweiten Summanden auf den repräsentativen Blockwert und somit die Änderungsgeschwindigkeit des repräsentativen Blockwerts an. Im praktischen Fall wird häufig gewählt
$\alpha \approx 2^{-4}$.

Es ist aber auch möglich, den repräsentativen Blockwert $B_t[i]$ aus dem ersten Element $X[i,1]$ und dem letzten Element $X[i,m]$ eines Blockes $B[i]$ zu ermitteln. Die Repräsentativwertberechnung erfolgt dann gemäß

$$B_t[i] = B_{t-1}[i] + X[i,1] - X[i,m] \tag{2}$$

Jeder repräsentative Blockwert $B_t[i]$ wird mit den Abtastwerten $r(k)$ des vom Signal in Senderichtung herrührenden empfangenen Echosignals multipliziert. Aus den Produkten wird für jeden Block ein Blockmittelwert $A_t[i]$ berechnet gemäß

$$A_t[i] = (1-\beta) A_{t-1}[i] + \beta \bullet B_t[i] \bullet \frac{r(k)}{const.} \tag{3}$$

mit $0 < \beta < 1$
und $1 \leq i \leq n$,

wobei $\beta$ nach den gleichen zuvor für $\alpha$ genannten Überlegungen gewählt wird.

Aus den Blockmittelwerten $A_t[1]...A_t[n]$ wird mittels einer logischen Schaltung 3 ermittelt, zu welchen Zeiten ein Echokompensator wirksam werden soll. Die Blockmittelwerte $A_t[1]...A_t[n]$ sind das Ergebnis der Blockautokorrelation zwischen den in einem Block gesendeten Signalen und den Echosignalen.

Unter der Voraussetzung, daß ein Echo im wesentlichen nur in einem Block auftritt, wird mit der logischen Schaltung 3 der größte Blockmittelwert $A_t[i]_{max}$ ermittelt, der somit das Vorhandensein eines Echos anzeigt. Die Abtastwerte in diesem so ermittelten Block werden dann zur Berechnung der Übertragungsfunktion des Echokompensators verwendet. Je nach Blockgröße und Rechenleistung eines digitalen Signalprozessors und je nach erforderlicher Genauigkeit ist es möglich, weitere, dem Block mit dem größten Blockmittelwert benachbarte, Blöcke $A_t[i]$ zur Berechnung der Übertragungsfunktion des Echokompensators zu verwenden. Ob nur der Block mit dem größten Blockmittelwert $A_t[i]_{max}$ oder weitere diesem Block benachbarte Blöcke $A_t[i]$ zur Berechnung der Übertragungsfunktion des Echokompensators herangezogen werden, hängt von der Größe eines Schwellwertes ab, mit dem die Blockmittelwerte von der logischen Schaltung 3 bewertet werden. Je kleiner der Schwellwert ist, desto größer wird die Wahrscheinlichkeit, daß mehr als ein Block zur Berechnung der Übertragungsfunktion des Echokompensators verwendet wird.

Für den Fall, daß das Echo zu unterschiedlichen Zeiten eintrifft, wird nicht nur der maximale Blockmittelwert $A_t[i]_{max}$ ermittelt, sondern es wird aus den n Blöcken eine Anzahl i Blöcke mit den größten Blockmittelwerten $A_t[i]$ ermittelt.

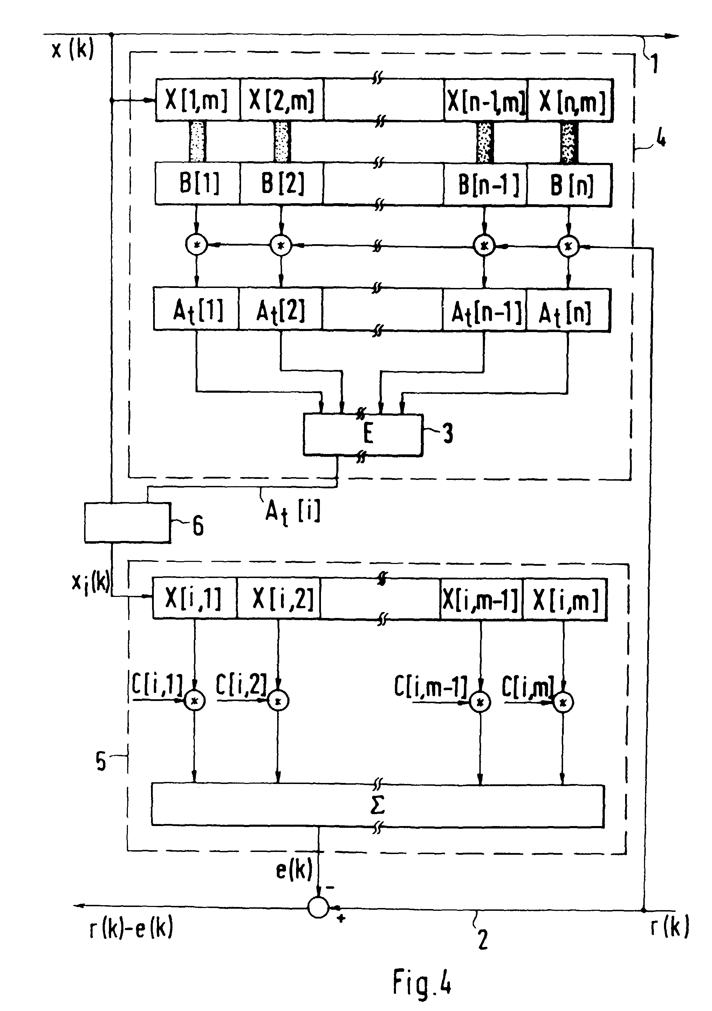

In Fig. 4 ist die Zusammenschaltung von einem Blockautokorrelator 4 mit einem Echokompensator 5 dargestellt. Für ausgewählte Blöcke i wird nun jeweils die Echofunktion e(k) nachgebildet, die von dem echobehafteten empfangenen Signal r(k) subtrahiert wird. Mit einer Torschaltung 6 wird bewirkt, daß nur die Abtastwerte $x_i(k)$ der ausgewählten Blöcke i für die Berechnung der Übertragungsfunktion des Echokompensators 5 verwendet werden. Die Übertragungsfunktion des Echokompensators 5 wird von einem digitalen Filter gebildet, in dem gemäß Gleichung (4) die Summe aus den Produkten X[i,p] der ausgewählten Blöcke i und den dazugehörigen Filterkoeffizienten C[i,p] gebildet wird; p gibt dabei die Anzahl der Abtastwerte innerhalb eines Blockes an.

$$e(k) = \sum_{p=1}^{m} X[i,p] \cdot C[i,p] \qquad (4)$$

Durch die Auswahl der für die Echokompensation relevanten Blöcke X[i,p] wird vorteilhafterweise gegenüber dem bekannten Stand der Technik Rechenzeit gespart. Es muß also nicht wie sonst üblich die Summe der Produkte aller Abtastwerte x(k) und der Filterkoeffizienten gebildet werden. Außerdem wird mit der erfindungsgemäßen Lösung auch die Anzahl der Filterkoeffizienten, die berechnet werden müssen, reduziert.

**Patentansprüche**

1. Verfahren zur Bestimmung der Übertragungsfunktion eines Echokompensators (5), der zwischen eine Leitung in Senderichtung (1) und eine Leitung in Empfangsrichtung (2) in einem Kommunikationssystem geschaltet ist und dessen Übertragungsfunktion durch Variation der Filterkoeffizienten eines digitalen Filters einstellbar ist,
   **gekennzeichnet durch**
   folgende Verfahrensschritte:

   - Die Abtastwerte (x(k)) des in dem Kommunikationssystem gesendeten Signals werden in eine Anzahl Blöcke (B[n]) unterteilt, in denen jeweils ein repräsentativer Blockwert ($B_t[i]$) aus den in dem jeweiligen Block enthaltenen Abtastwerten (x(k)) berechnet wird,

   - mit einem von dem gesendeten Signal herrührenden Echosignal (r(k)) und dem jeweiligen repräsentativen Blockwert ($B_t[i]$) wird eine Blockautokorrelation durchgeführt, deren Ergebnis eine Anzahl von Blockmittelwerten ($A_t[n]$) liefert,

   - mittels einer logischen Schaltung (3) wird mindestens ein Blockmittelwert $A_t[i]$) ausgewählt, der einen definierten Schwellwert überschreitet, mit dem der Zeitabschnitt erkannt wird, in dem ein Echosignal (r(k)) auftritt und eine Aktualisierung der Filterkoeffizienten des digitalen Filters erforderlich ist.

2. Verfahren nach Anspruch 1, dadurch gekennzeichnet, daß bei einem singulären Echo die Aktualisierung der Übertragungsfunktion des digitalen Filters in dem Block erfolgt, dessen Blockmittelwert von dem singulären Echo bestimmt wird und daß bedarfsweise ergänzend wenigstens ein zeitlich vorhergehender und wenigstens ein zeitlich nachfolgender Block zur Aktualisierung der Übertragungsfunktion des digitalen Filters verwendet wird.

3.  Verfahren nach Anspruch 1, dadurch gekennzeichnet, daß bei einer Anzahl q zeitlich verteilter Echosignale jeweils die von den q Echosignalen herrührenden Blockmittelwerte und damit die Blöcke ermittelt werden, die zur Aktualisierung der Übertragungsfunktion des digitalen Filters verwendet werden.

## Claims

1.  Process for determining the transfer function of an echo compensator (5), that is connected in a communications system between a line in the transmit direction (1) and a line in the receive direction (2), and whose transfer function can be adjusted by varying the filter coefficients of a digital filter,
    **characterised by**
    the following process steps:

    -   the sampling values $(x(k))$ of the signal transmitted in the communications system are split into a number of blocks $(B[n])$ in which a representative block value $(B_t[i])$ is calculated in each case from the sampling values $(x(k))$ contained in the respective block,

    -   a block auto-correlation is carried out with an echo signal $(r(k))$ originating from the transmitted signal and with the respective representative block value $(B_t[i])$, the result of said block auto-correlation delivering a number of block average values $(A_t[n])$,

    -   at least one block average value $(A_t[i])$ is selected by means of a logic circuit (3), which block average value exceeds a defined threshold value, with which the time slot in which the echo signal $(r(k))$ occurs is detected, and updating of the filter coefficients of the digital filter is necessary.

2.  Process according to Claim 1, **characterised in that** in the case of a unique echo, the updating of the transfer function of the digital filter is effected in the block whose block average value is determined by the unique echo and that, where necessary, and additionally, at least one chronologically preceding block and at least one chronologically following block is used for updating the transfer function of the digital filter.

3.  Process according to Claim 1, **characterised in that** with a number q of chronologically distributed echo signals, each of the block average values originating from q echo signals, and thus the blocks, are determined, and these are used for updating the transfer function of the digital filter.

## Revendications

1.  Procédé pour déterminer la fonction de transfert d'un annuleur d'écho (5) qui est connecté entre une ligne dans la direction d'émission (1) et une ligne dans la direction de réception (2) dans un système de communication et dont la fonction de transfert est réglable par une variation du coefficient de filtrage d'un filtre numérique, caractérisé par les étapes suivantes :

    -   les valeurs de balayage $(x(k))$ du signal envoyé dans le système de communication sont divisées en un nombre de blocs $(B[n])$ dans lesquels respectivement une valeur de bloc représentative $(B_t[i])$ est calculée à partir des valeurs de balayage $(x(k))$ contenues dans le bloc respectif;
    -   avec un signal d'écho $(r(k))$ provenant du signal envoyé et la valeur de bloc représentative respective $(B_t[i])$, une auto-corrélation de bloc est effectuée dont le résultat fournit un nombre de moyennes par bloc $(A_t[n])$,
    -   au moyen d'un circuit logique (3), au moins une moyenne par bloc $A_t[i]$ est sélectionnée qui dépasse une valeur de seuil définie, avec laquelle l'intervalle de temps est reconnu pendant lequel apparaît un signal d'écho $(r(k))$ et une mise à jour du coefficient de filtrage du filtre numérique est nécessaire.

2.  Procédé selon la revendication 1, caractérisé en ce que dans un écho singulier, la mise à jour de la fonction de transfert du filtre numérique a lieu dans le bloc dont la moyenne par bloc est déterminée par l'écho singulier et en ce que, si nécessaire, au moins un bloc antérieur dans le temps et au moins un bloc ultérieur dans le temps sont utilisés en complément pour la mise à jour de la fonction de transfert du filtre numérique.

3. Procédé selon la revendication 1, caractérisé en ce qu'avec un nombre q de signaux d'écho répartis dans le temps, respectivement les moyennes par bloc provenant des q signaux d'écho, et donc les blocs, sont déterminées qui sont utilisées pour la mise à jour de la fonction de transfert du filtre numérique.

Fig.1

Fig.2

Fig.3

Fig.4